Europäisches Patentamt

European Patent Office

Office européen des brevets

(19)

(11) Publication number: **0 064 074**
**B1**

(12) **EUROPEAN PATENT SPECIFICATION**

(45) Date of publication of patent specification: **14.09.88**

(51) Int. Cl.⁴: **G 06 F 13/18**

(21) Application number: **81903044.6**

(22) Date of filing: **29.10.81**

(86) International application number:
**PCT/US81/01455**

(87) International publication number:
**WO 82/01777 27.05.82 Gazette 82/14**

(54) **DATA TRANSMITTING LINK.**

(30) Priority: **10.11.80 US 205164**

(43) Date of publication of application:
**10.11.82 Bulletin 82/45**

(45) Publication of the grant of the patent:
**14.09.88 Bulletin 88/37**

(84) Designated Contracting States:
**CH DE FR GB LI NL SE**

(56) References cited:
**US-A-3 530 438**
**US-A-3 833 888**
**US-A-4 032 899**
**US-A-4 071 887**
**US-A-4 124 891**
**US-A-4 155 117**
**US-A-4 164 787**
**PROCEEDINGS DISTRIBUTED COMPUTING**
**COMPCON 80, 23-25 September 1980,**
**Washington, D.C., US, pages 50-54, IEEE, New**
**York, US; A. MAEDA et al.: "A distributed file**
**system in EPOS".**

(73) Proprietor: **WANG LABORATORIES INC.**
**One Industrial Avenue**
**Lowell, MA 01851 (US)**

(72) Inventor: **CHEUNG, Kin L.**
**51A Caldwell Road**
**Nashua, New Hampshire 03060 (US)**

(74) Representative: **Marsh, Roy David et al**
**Brewer & Son 5-9, Quality Court Chancery Lane**
**London WC2A 1HT (GB)**

(56) References cited:
**PROC. OF THE NAT. ELECTR. CONF., vol. 33,**
**29-31 October 1979, pages 413-417, A.J.**
**HEATWOLE et al.: "The CP9000 - A**
**multiprocessor for data communications".**
**IBM TECHNICAL DISCLOSURE BULLETIN, vol.**
**15, no. 1, June 1972, pages 257-258, New York,**
**US; T.V. HARROUN: "Storage refresh control**
**and synchronization".**
**IBM TECHNICAL DISCLOSURE BULLETIN, vol.**
**10, no. 7, December 1967, pages 927-928, New**
**York, US; L.B. ANDERSON et al.: "Overlapped**
**storage requests by a channel".**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

(58) References cited:

**IBM TECHNICAL DISCLOSURE BULLETIN, vol. 23, no. 7B, December 1980, pages 3295-3296, New York, US; A. McDOWELL: "Processor system with tri-state buffers".**

## Description

This invention relates to information processing and more particularly to forwarding data from one station of a data processing network to another.

United States patent specification No. 4,071,887 discloses a data processing network having a plurality of stations. This network includes a communication link for receiving data from one station and forwarding the data to another station of the network. The link includes a plurality of data ports each of which is constructed to receive data from and despatch data to an associated station. The link also includes a processor to manipulate the data in response to a program, a memory unit for storing the data, a synchronisation code register and a status register to receive signals indicating the needs of the link components.

United States patent specification No. 4,032,899 discloses a communication link having a modular structure for switching data between any two of a multiplicity of ports. This link includes a plurality of processor modules, memories attached to the respective processor modules and transfer means to transfer data between any port and any processor module.

According to the present invention there is provided a communication link for receiving data from one station of a data processing network having a plurality of stations and forwarding such data to another station of the data processing network, said link including a plurality of data ports each constructed to receive data from and dispatch data to an associated station when connected thereto, a processor for effecting manipulations of data in accordance with a program, a memory unit for storing data, memory priority circuitry which receives signals indicating the needs of link components for access to the memory characterised in that in response to said memory access needs said memory priority circuitry emits signals determining, in accordance with a priority scheme, the access to the memory, and interconnections connecting said port, processor and memory together wherein

said memory unit includes a common section accessible to all of said ports and a plurality of local sections each associated with one of said plurality of ports and accessible to its associated port, and no other port,

said interconnections include a dual memory bus with a common bus subsystem providing access to the common memory section and a local bus subsystem providing access to the plurality of said local memory sections, said common and local subsystems being constructed to enable concurrent independent use,

each of said ports includes decoding circuitry which receives signals from its associated station and in response thereto emits signals distinctively indicating the need for access to common or local memory, which emitted signals are transmitted to said memory priority circuitry

said memory priority circuitry supplies timed signals which designate for each memory operating cycle the one of said ports which may have access to the memory, access being made available to the several ports in cyclic order,

said memory priority circuitry for each memory cycle designates one of said ports for current service and responds to request signals from elements of the link indicating needs for memory access, and if the currently designated port requests memory access, enables said currently designated port to use the common bus subsystem or the local memory bus subsystem in accordance with the signaled needs of said currently designated port, said memory priority circuitry concurrently enabling other elements of the link to use the bus subsystems not requested by the currently designated port.

The invention may additionally feature processing access requests for a succeeding memory operation while a current memory operation is in progress and a memory operation rate such that the time interval expressed by $(n+1) T+L$ is less than the minimum time required to transmit one byte of data to one of said ports, n being the number of ports, T being the memory operating cycle period, and L being the overlap period during which memory requests are being processed for a succeeding memory operation while a current operation is in progress.

Brief description of the drawing

Figure 1 shows in block diagram form a data processing network in which a communication link according to the invention is used.

Figure 2 shows in block diagram form the communication link of Figure 1.

Figure 3 shows in block diagram form the processor which is a part of the link of Figure 2.

Figure 4 shows in block diagram form the memory unit which is a part of the link of Figure 2.

Figure 5 shows in block diagram form one of the data ports of the link of Figure 2.

Figures 6-1, 6-2, and 6-3 are in the aggregate the schematic wiring diagram of the processor of Figure 3.

Figures 7-1, 7-2, are in the aggregate the schematic wiring diagram of the memory unit of Figure 4.

Figures 8-1, 8-2, 8-3 are in the aggregate the schematic wiring diagram of the data port of Figure 5.

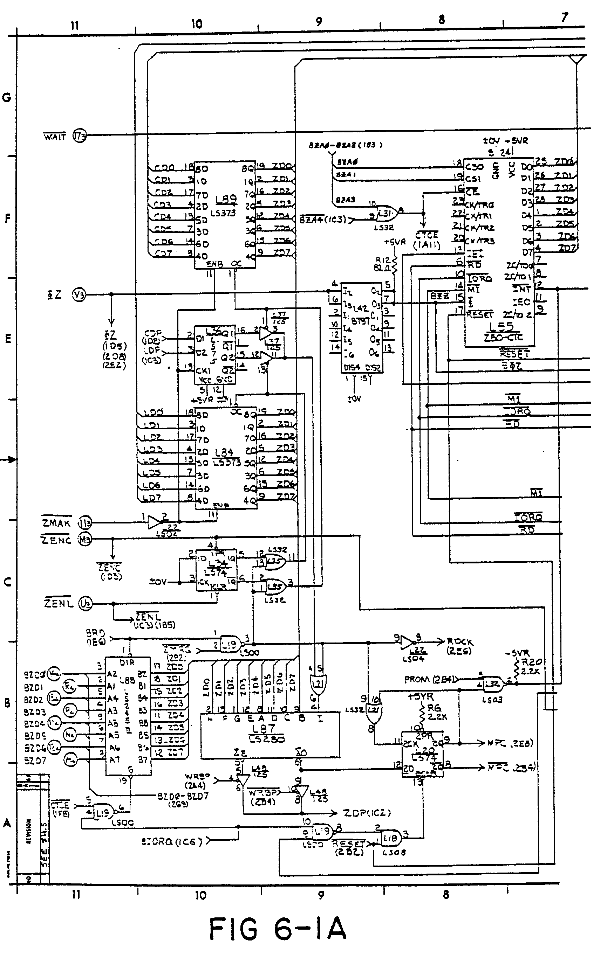

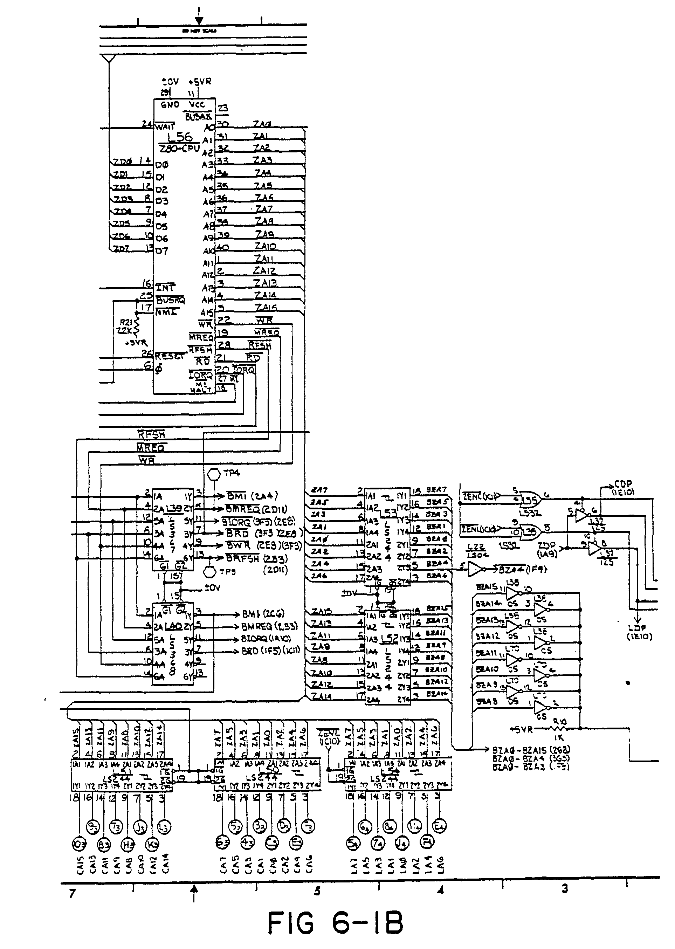

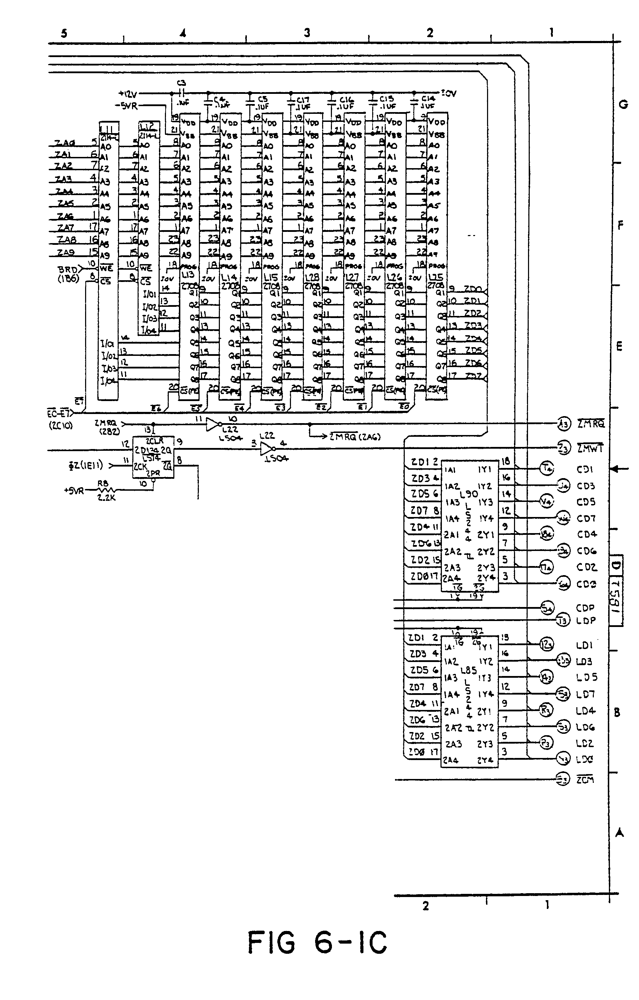

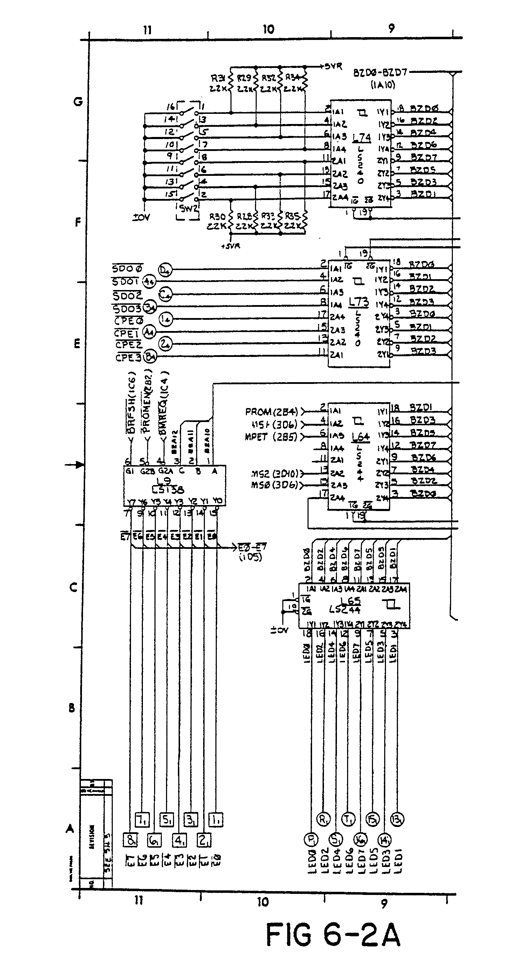

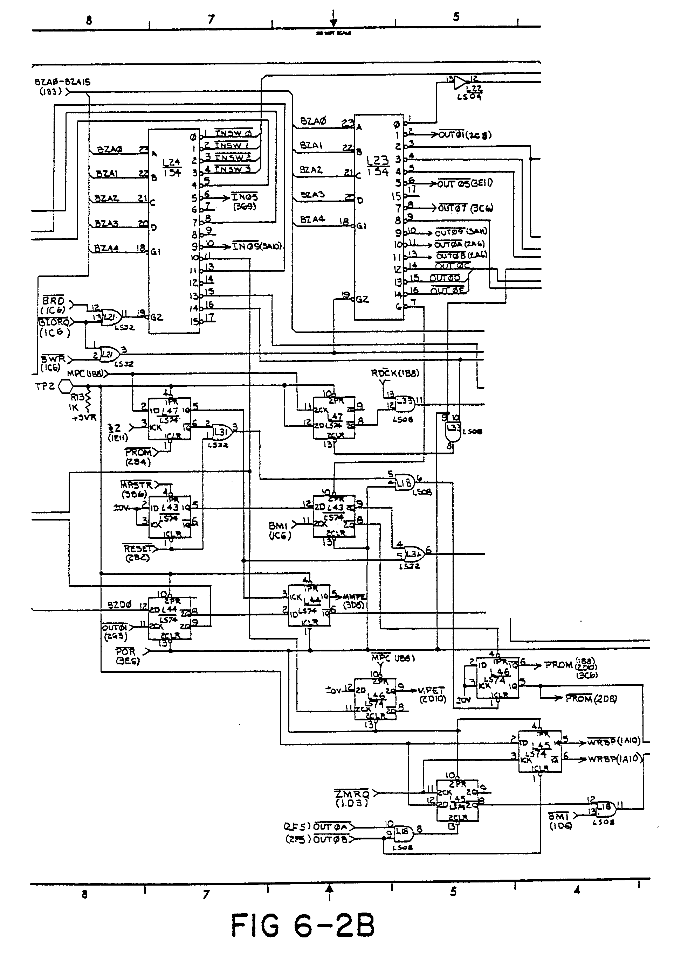

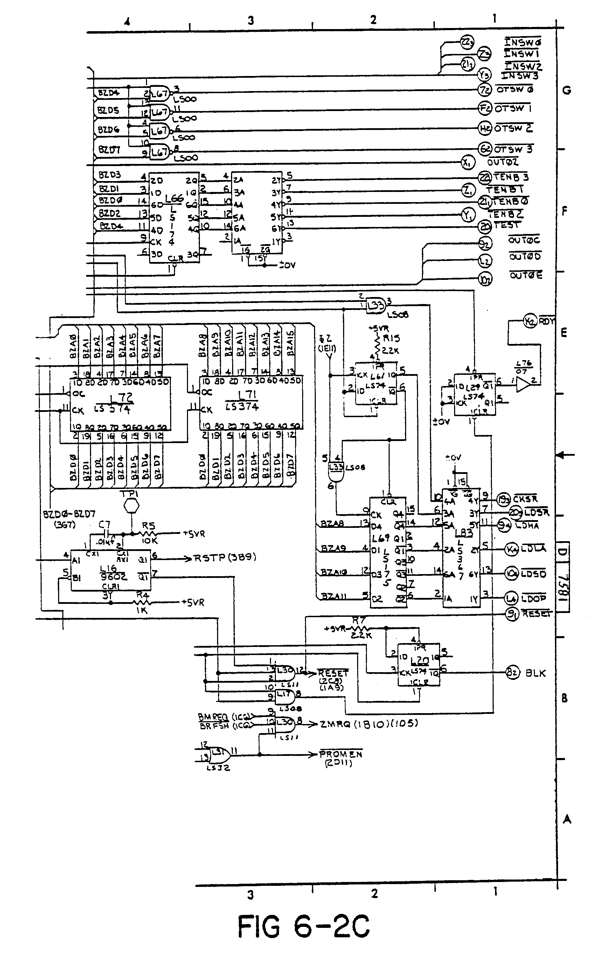

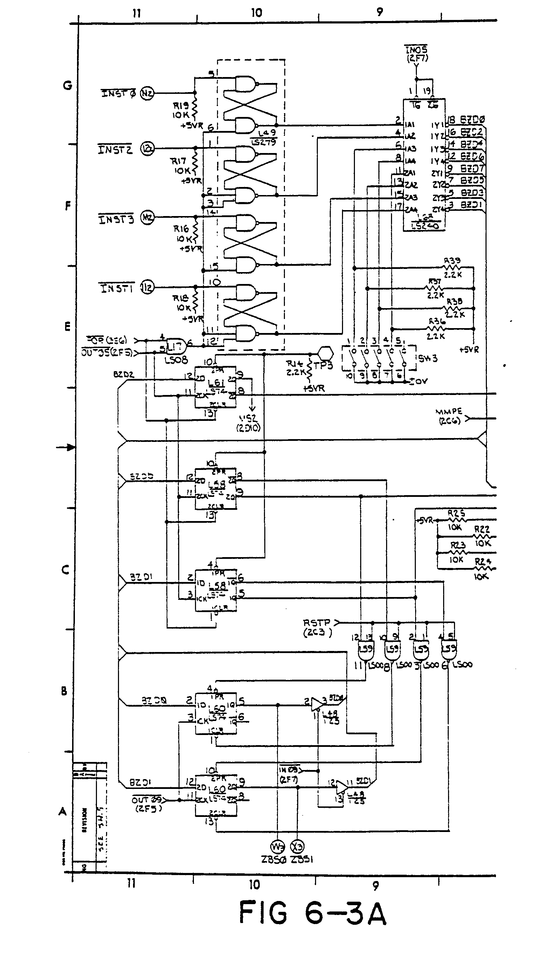

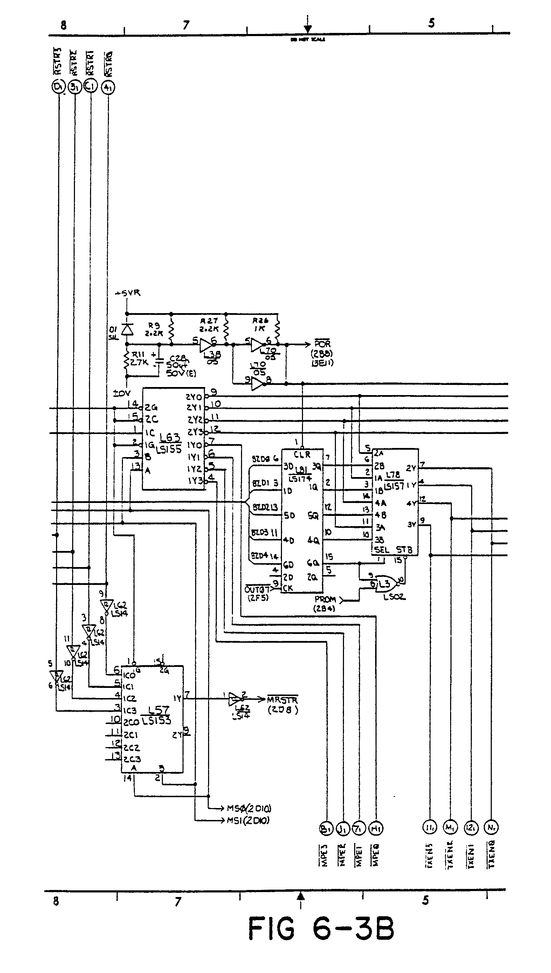

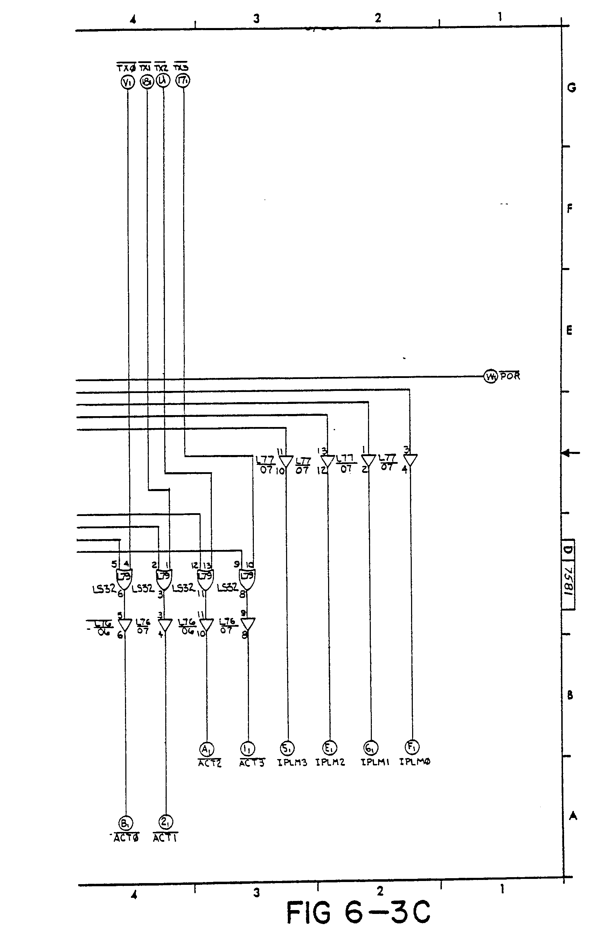

In each of multipart Figures 6, 7, and 8, in order to avoid a clutter of lines a number of connecting leads are not shown in full but are terminated with an arrowhead and a notation identifying the lead and the location on the drawing where it goes, the location being given by a first number, a letter, and a second number all in parenthesis. The first number indicates the drawing part, the letter and the second number indicates, by reference to the edge marking, the placed on the sheet. At the designated place will be found a lead starting with an arrowtail and a notation identifying the lead and an indication in parenthesis of the origin of the lead. The arrowhead and arrowtail thus coupled are to be considered as connected.

## Description of the embodiment

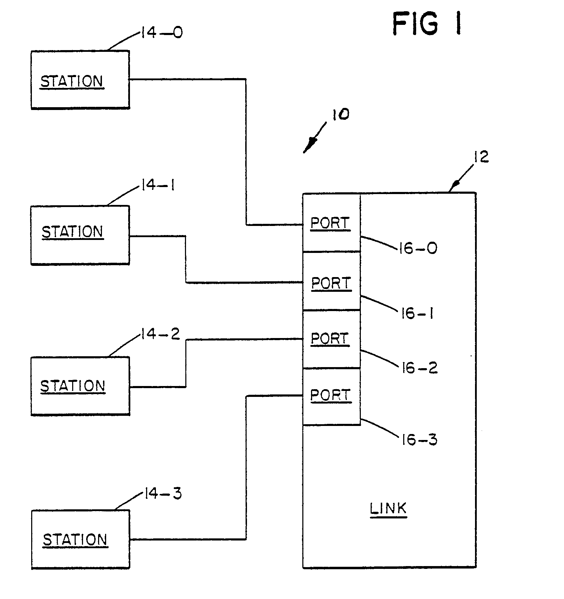

As shown in Figure 1, data processing network 10 includes a communication link 12, according to the invention, linking four work stations 14-0, 14-1, 14-2, and 14-3, the work stations being connected to data ports 16-0, 16-1, 16-2, 16-3 respectively which are part of link 12.

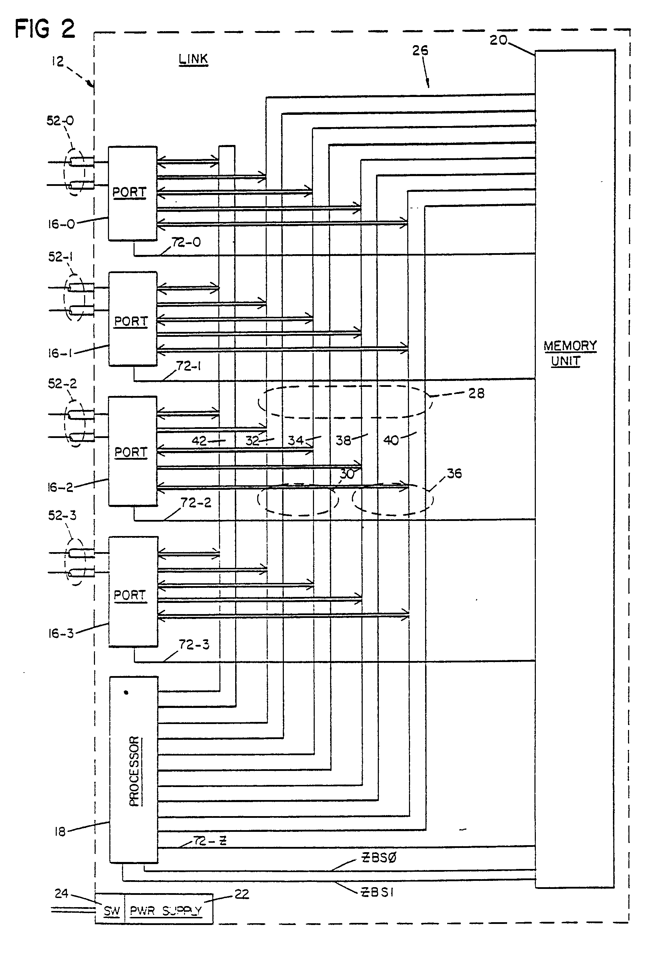

Link 12, as shown in Figure 2, includes data ports 16-0, 16-1, 16-2, 16-3, processor 18, memory unit 20, and power supply 22, with switch 24. Interconnections 26 connect together the ports, processor, memory unit, and power supply, and include a dual memory bus system 28 with a local memory bus substystem 30 having a local address bus 32 and a local data bus 34, and a common memory bus subsystem 36 having a common address bus 38 and a common data bus 40. Interconnections 26 also include diagnostic bus 42 and other control leads.

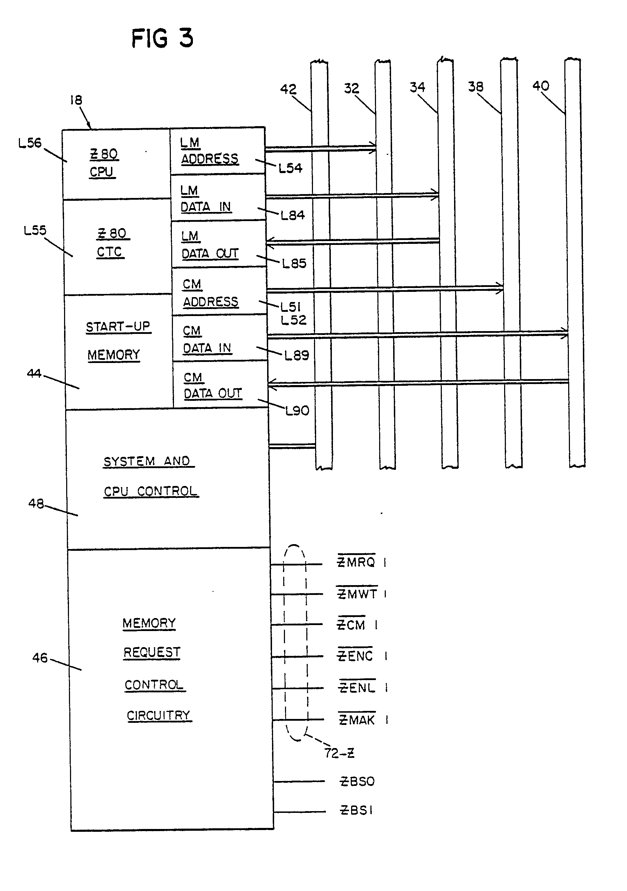

Referring now to Figure 3, 6-1, 6-2, and 6-3, processor unit 18, includes a Z80 CPU L56 and a Z80 CTC L55, a local memory address buffer L54 connected to the local memory address bus 32, a local memory data-in buffer L84, and a local memory data-out buffer L85, both connected to local memory data bus 34, a common memory address buffer L51 and L52 connected to the common memory address bus 38 and a common data in buffer L89 and common data out buffer L90 both connected to the common data bus 40. The processor unit 18 additionally includes a start up memory 44 of elements L11 through L15 and L25 through L28, wherein there are 7K of programmable read only memory and 1K of random access memory. The processor also includes memory request/control circuitry 46 connecting through leads $\overline{ZMRQ}$, $\overline{ZMWT}$, $\overline{ZCM}$, $\overline{ZENC}$, $\overline{ZENL}$, ZBS0, ZBS1 to memory unit 20. The processor unit includes circuitry 48 of conventional design dealing with diagnostic operations for detecting errors and other control functions which are shown in detail in Figures 6-1, 6-2, 6-3 but are not directly related to the subject invention and need not be discussed further.

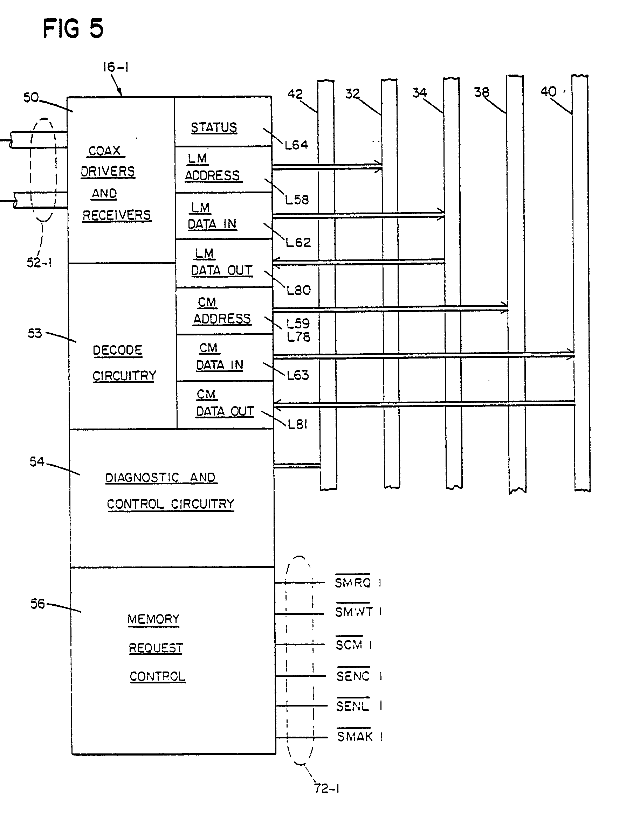

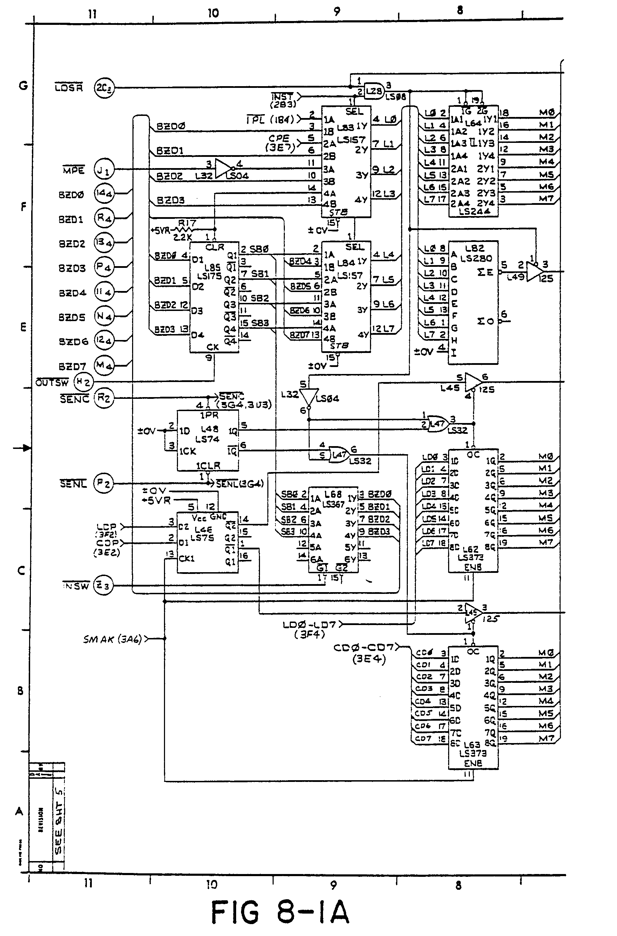

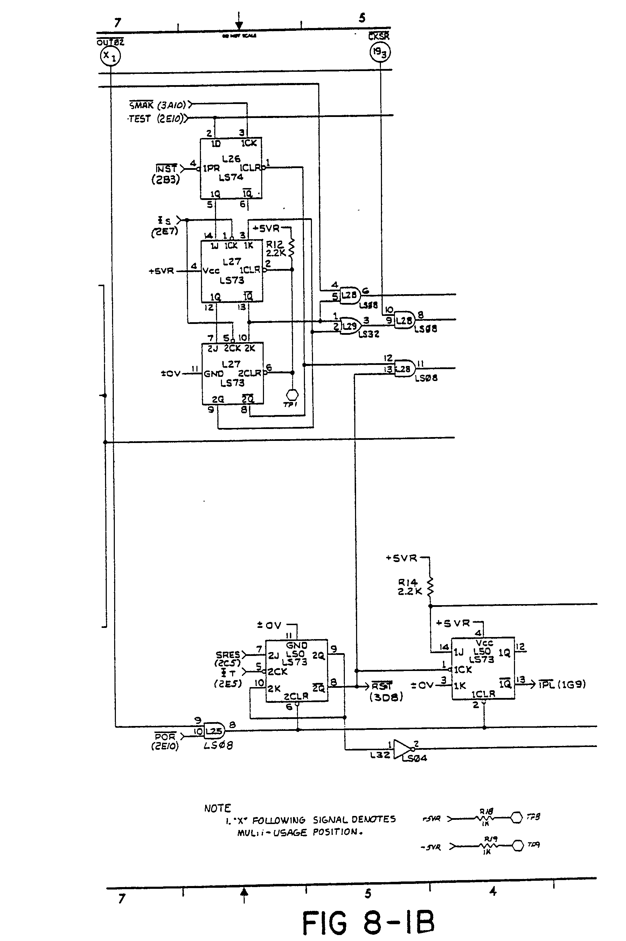

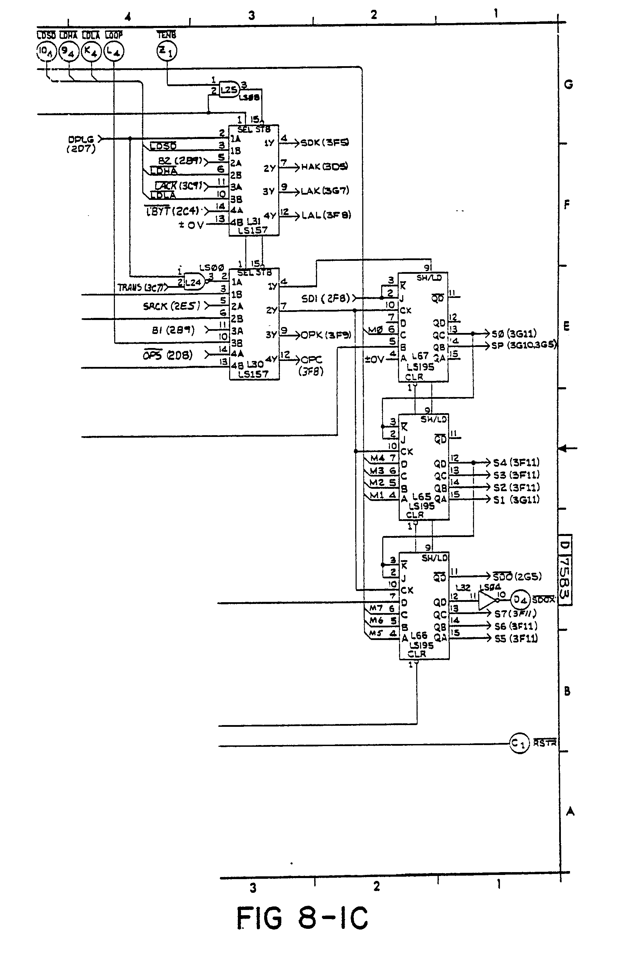

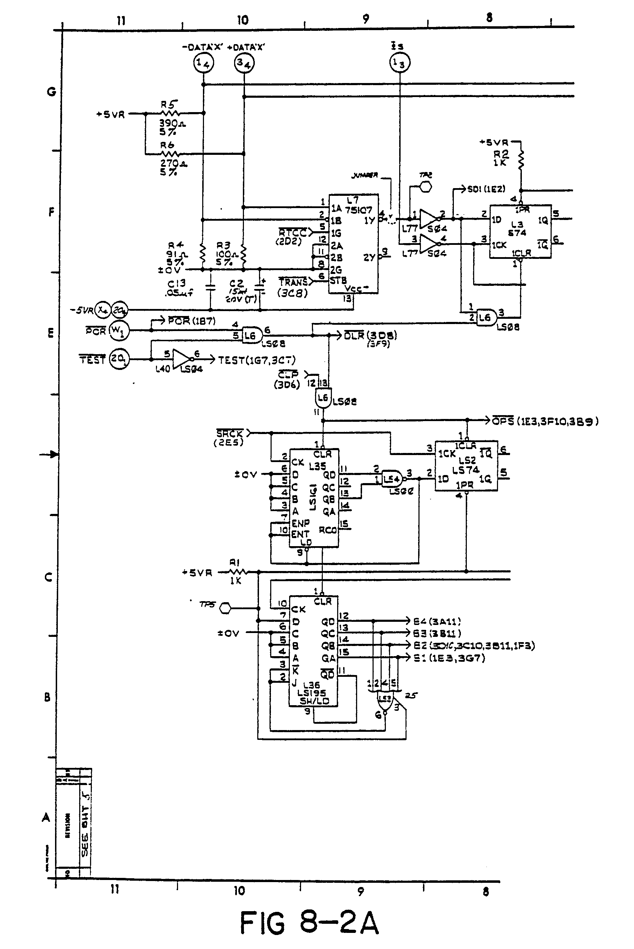

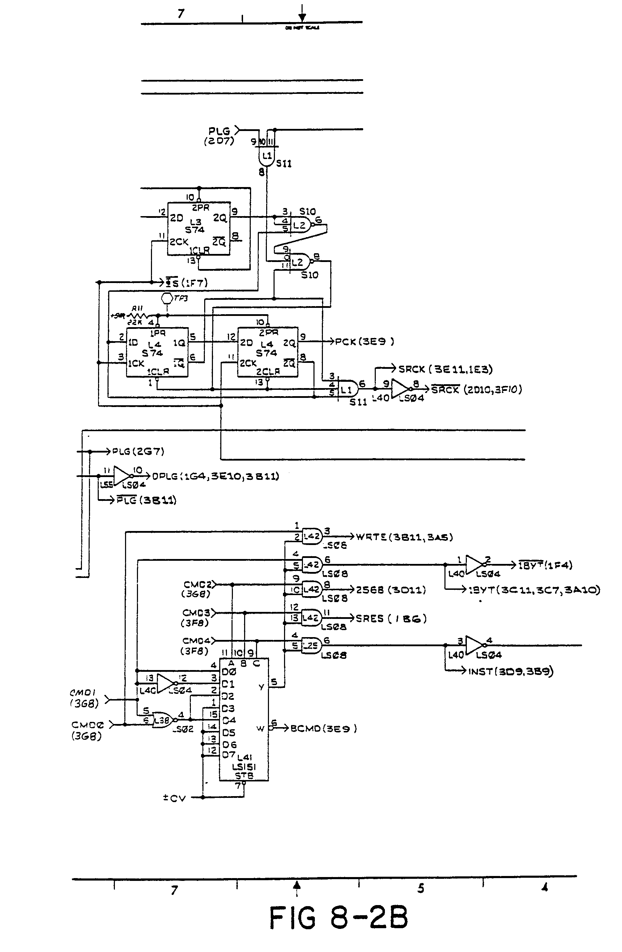

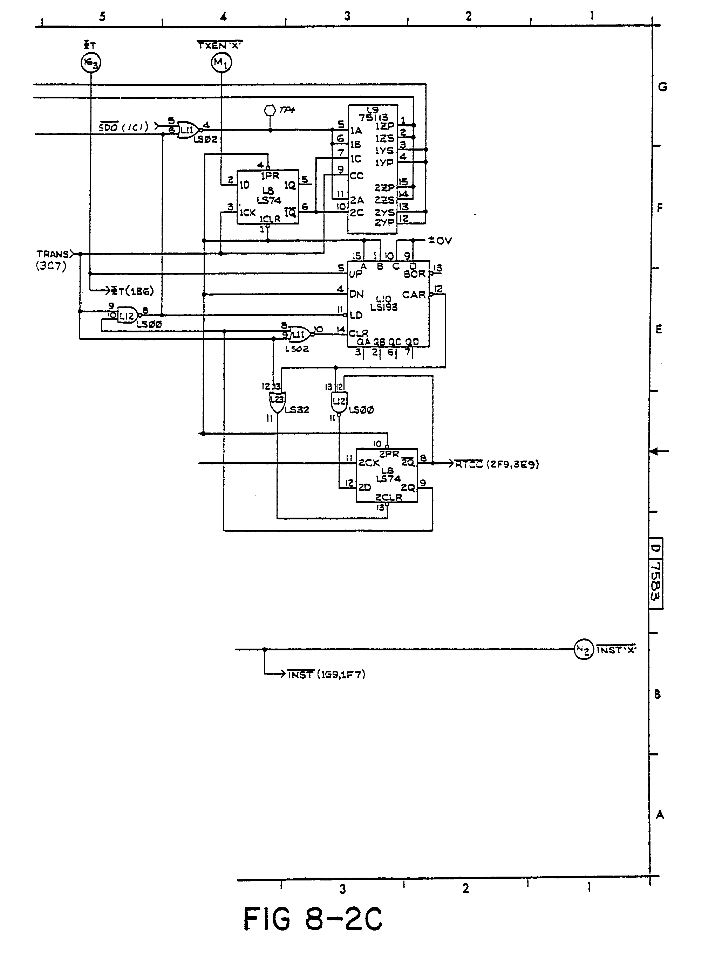

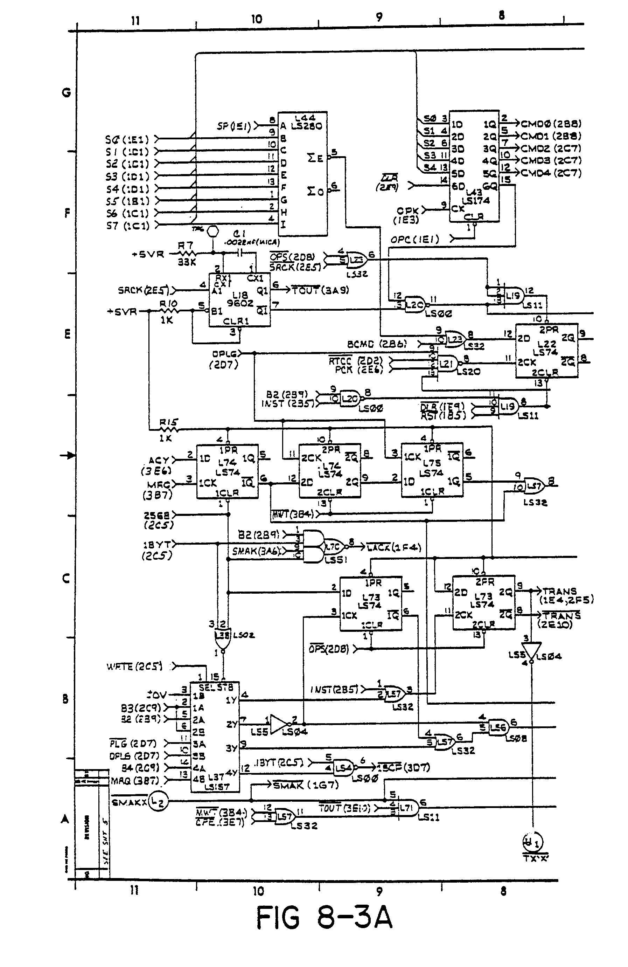

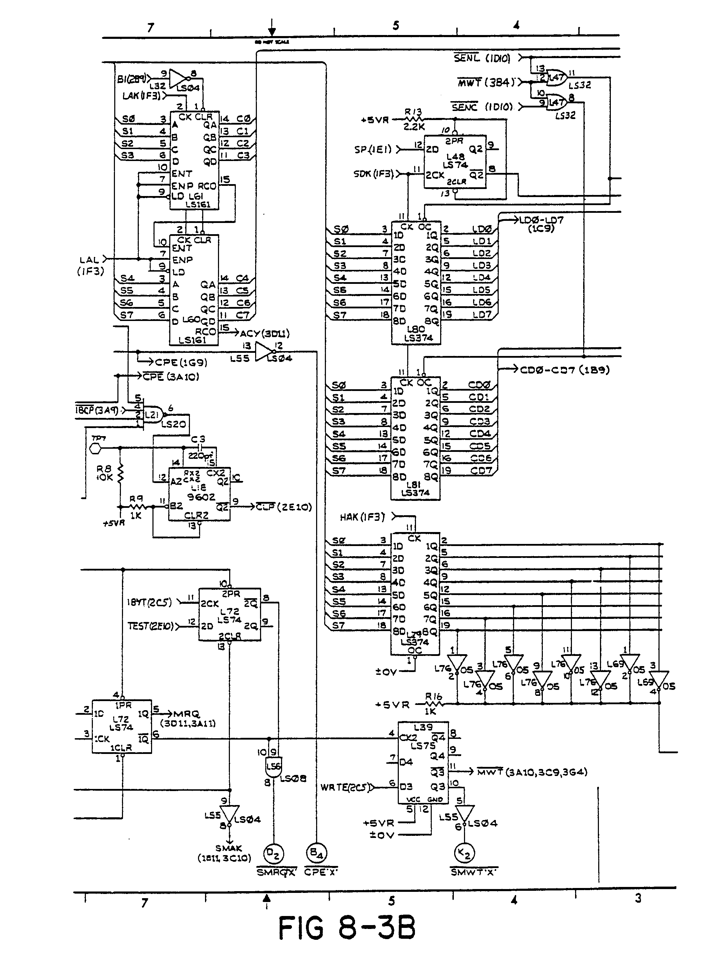

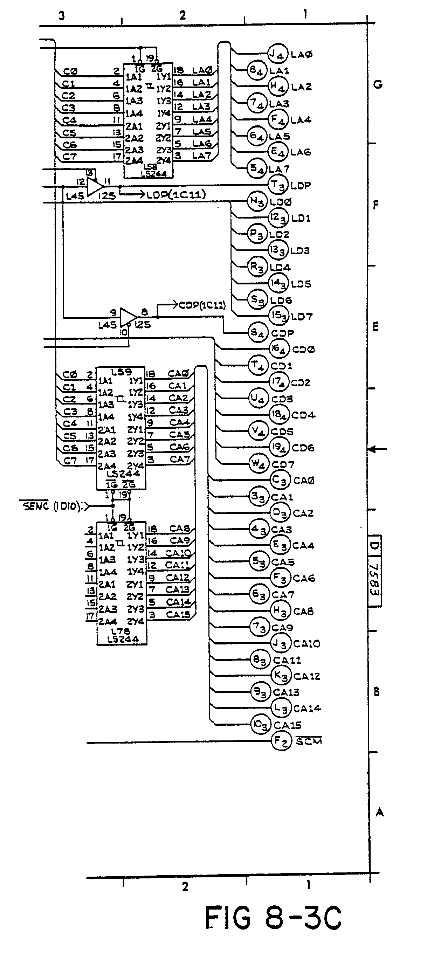

Referring now to Figures 5, 8-1, 8-2, 8-3 data port 16-1 is shown as representative of the four identical ports 16-0, 16-1, 16-2, 16-3. The data port includes coax driver and receiver circuitry 50, which is connected to dual coax transmission lines 52-1 to an associated remote station, and decoding circuitry 53 which includes IC components L40, L41, L42, and L25. The data port also includes diagnostic and control circuitry 54 and memory request-control circuitry 56 connecting through leads

$$\overline{SMRQ}1, \overline{SMWT}1, \overline{SCM}1,$$

$$\overline{SENG}1$$
$$\overline{SENG}1, \overline{SENL}1, \text{ and } \overline{SMAK}1$$

to memory unit 20. The data port additionally includes status buffer L64, local memory address buffer L58 connecting with local address bus 32, local memory data-in buffer L62 and local memory data-out buffer L80, both connecting with local data bus 34, common memory address buffer L59, L78 connecting with common address bus 38, and common memory data-in buffer L63 and common memory data-out buffer L81 both connecting with common memory data bus 40.

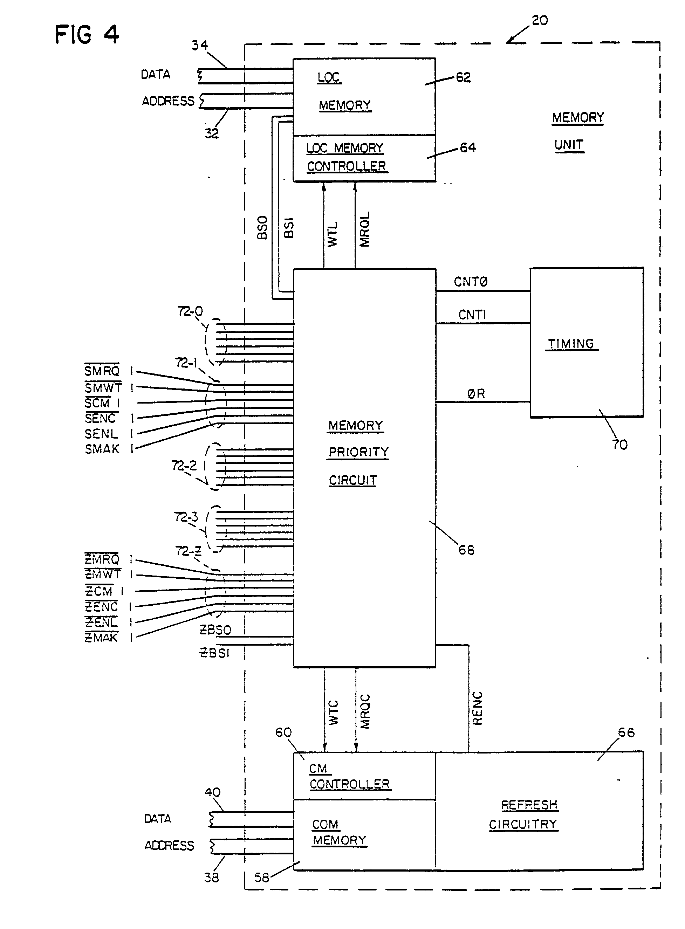

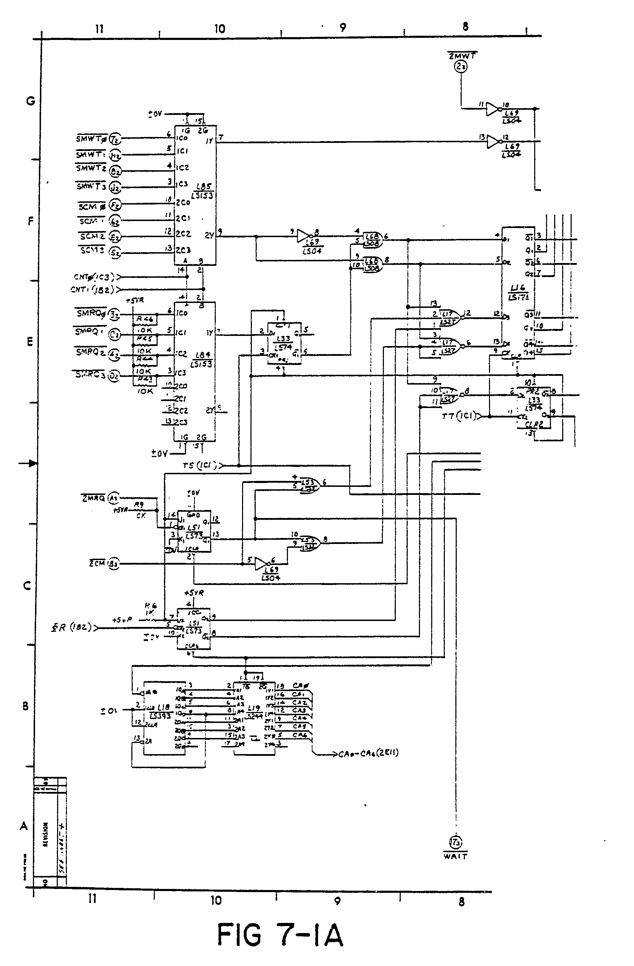

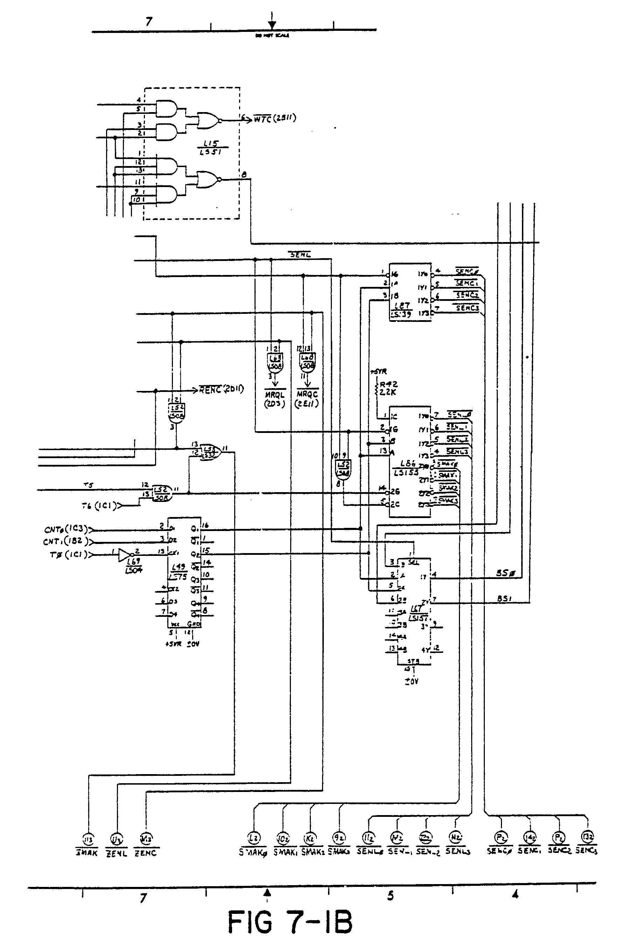

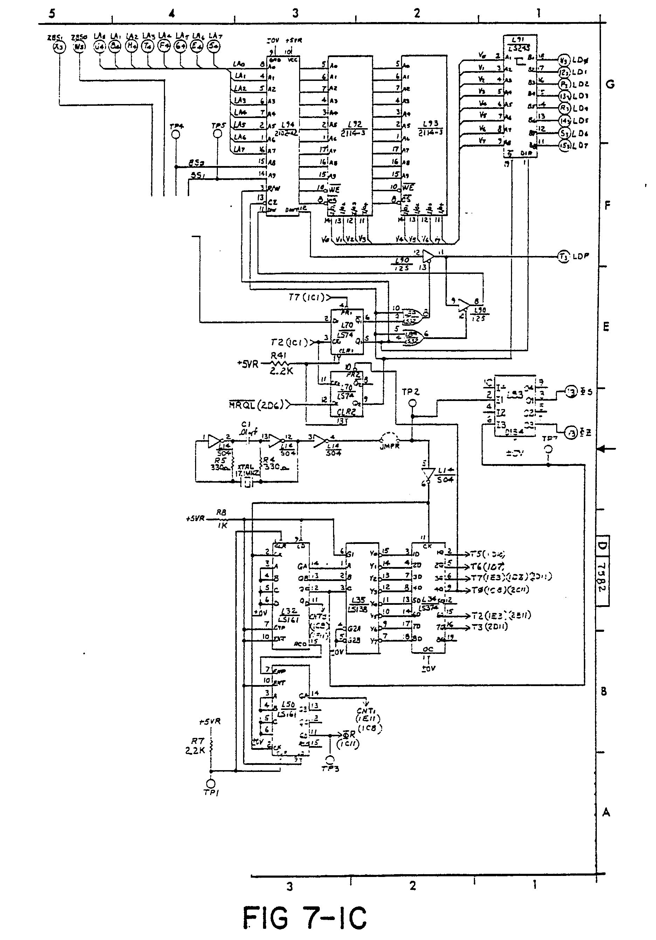

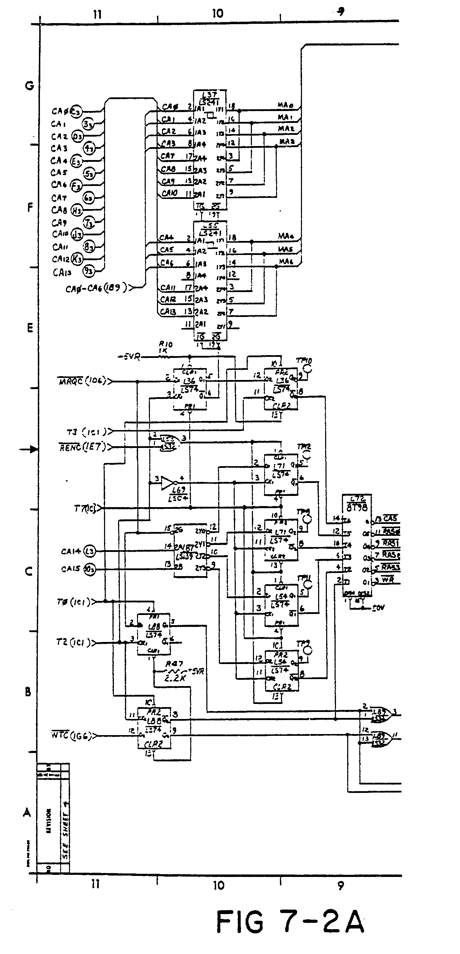

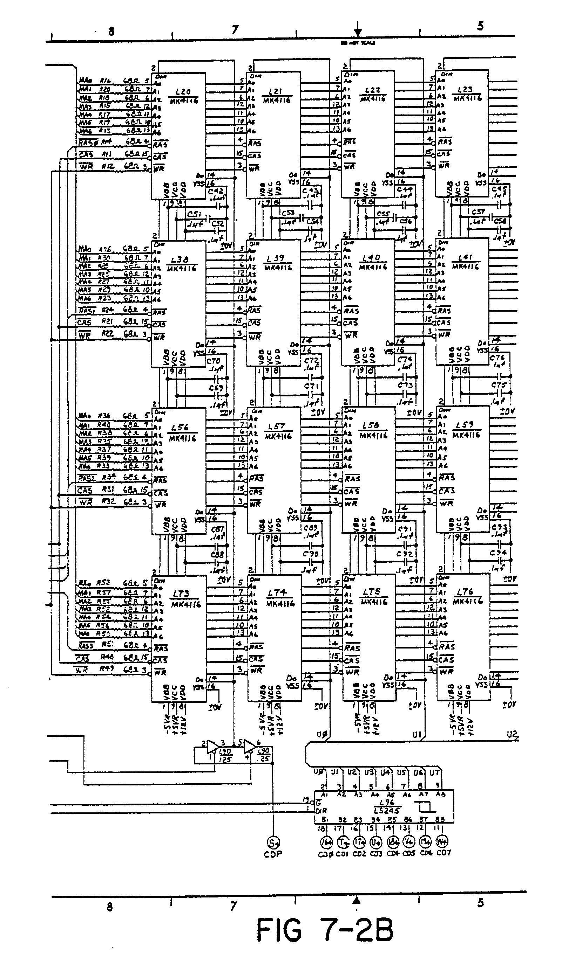

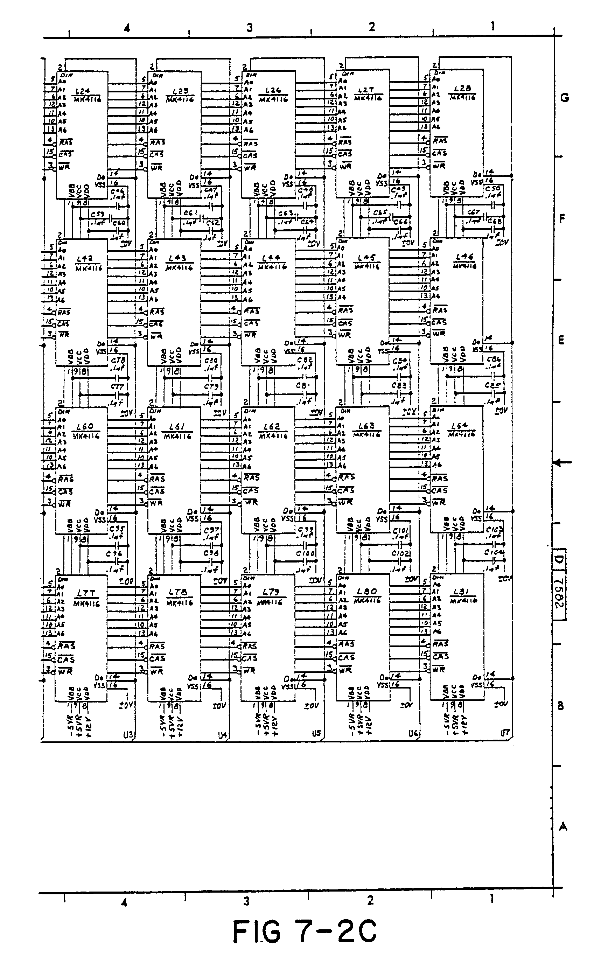

Referring now to Figures 4, 7-1, 7-2, memory unit 20 includes a common section 58 with a memory controller 60, and refresh circuitry 66, local memory sections 62 with local memory controller 64, memory priority circuitry 68 and timing circuitry 70. Common memory 58 has a 9 bit by 64K capacity and its 16 address bits connect to common address bus 38, and its 8 data bits and one parity bit to common data bus 40. Local memory 62 has a 9 bit by 1K capacity and its data bits connect to local memory bus 54. Of the 10 addressing bits of the local memory 62 eight (LA0—LA7) connect to local address bus 32. The remaining 2 addressing bits are connected through leads BS0 and BS1 to memory priority circuitry 68. Local memory 62 is thus effectively divided into 4 sections with data entering from local data bus 34 entered into a memory section in accordance with the signals on leads BS0 and BS1 from memory priority circuitry 68. Timing circuitry 70 includes a crystal oscillator operating with a period 58 ns from which are derived various timing signals for synchronizing the system. Among these are signals emitted on lead CNT0 with period 936 ns and on lead CNT1 with period 1872 ns which are used to control the time sharing of the four ports. Memory priority circuitry 68 connects through control leads 72-0, 72-1, 72-2, 72-3, to ports 16-0, 16-1, 16-2, 16-3, and to processor 18, through leads 72-Z, ZBS0 and ZBS1. It also connects with the local and common memories, the refresh circuitry and the timing circuitry.

All chips used in the link are standard commercially available items described in published documents well known in the field. Their standard commercial designations are indicated on each in the detailed drawings.

In operation, each port of the link transfers serial data to or from its corresponding station at a rate of 4.27 megabits per second over the double coaxial cable 52-1 (using port 16-1 as exemplary). The transmission character consists of 11 bits: a start bit (one) eight data bits (transmitted most significant bit first), an odd parity bit, and a stop bit (zero). When the transmission cable is idle the port is in its receive state and the signal state is zero. The protocol between the link and the stations calls for the station to initiate all transmissions. When such a signal is transmitted to the port it is stripped of its start and stop bits, parallelized and parity checked. The protocol admits of six commands:

1) write one byte to memory (code 1010 0011). The first following transmission character will contain the 8-bit high order address of the memory site, the second following character will contain the 8-bit lower address, and the third following character will contain the 8-bit data byte.

2) write 256 bytes to memory (code 1010 0101). The next transmission characters will contain the high order address, the lower order address for the first byte and then the data bytes successively to be written to memory.

3) read one byte from memory (code 1010 0010). The first following transmission character will contain the high order address and the second following character the low order address of the byte to be read.

4) read 256 bytes from memory (code 1010 0100). The first following transmission character will contain the high order address and the second following will contain the low order address of the first of the 256 bytes to be read.

5) reset (code 1010 1000)

6) report hardware status (code 1011 0000) Commands 5 and 6 will be discussed in connection with start up and diagnostics.

The parallelized byte is entered into decoding buffer L41, into memory-out buffers L80, L81 and address buffers L58, L59, L62. Decode circuitry decodes the command, counts successives bytes as required to interpret whether a byte is a high order address, a low order address, a data byte, or a command and decodes the address to distinguish whether the address is in local or common memory. (The lowest 256 addresses are assigned to local memory). The decode circuitry outputs on leads $\overline{SMRQ1}$, $\overline{SMWT1}$, and $\overline{SCM1}$ signals indicating respectively whether memory is needed or not, whether read or write is required, and whether common or local memory is required.

Concurrently with the transmission flowing between each of the ports and its associated station, the CPU is engaged in activities for management of the link and its data space under control of the program in a portion of the common memory and these activities generate requirements to have access to the common and to each of the local memory sections. Memory request control circuitry 46 in the CPU unit indicates its needs for memory access by signals on lead $\overline{ZMRQ}$, $\overline{ZMWT}$, $\overline{ZCM}$ in a manner directly analogous to similar signals from the ports as described above. In addition the memory request circuitry generates signals on leads ZBS0 and ZBS1 which indicate which of the four sections of local memory are needed.

The signals indicating memory access needs from all ports and from the CPU pass to the memory priority circuitry 68 in the memory unit. The priority circuitry also receives signals from the timing circuitry 70 on lead φR indicating a need to refresh the dynamic common memory and signals on CNT0 and CNT1 which designate the particular one of the ports to have its turn to be served. The logic of the priority circuits designate the access to the memory buses for the next memory cycle in response to input signals according to the following priorities:

1. To the port designated by CNT0 and CNT1 for either the local or common memory buses in accordance with its request.

2. To the refresh circuitry for the common memory buses if these are not used at higher priority.

3. To the CPU if the bus it requests is not assigned by higher priority.

The memory priority circuitry emits signals on leads $\overline{SENC}$-1, $\overline{SENL}$-1, and $\overline{SMAK}$-1 to port 16-1 and analogous ones to other ports and the CPU unit to effect the switching to the buses in accordance with the priority decision as described above. In addition the priority circuitry generates signals which designate the particular section of the local memory to be addressed by generating address bits emitted on leads BS0 and BS1. When a particular port is given access to the local memory, these two bits are derived from the signals on CNT0 and CNT1 which indicate the port on turn. When the CPU is given access to the local memory the two address bits are derived from the signals emitted by the CPU on leads ZBS0 and ZBS1. ·

A single operation of the memory includes a period of 117 ns for resolving the bus priorities followed by a period of 468 ns for actual memory access. To speed up memory operation the successive operations are overlapped, with priority resolution for a succeeding cycle going forward while memory entry is in progress, so that the memory cyclic period is 468 ns. In the event a particular port had signaled its need for memory just after the memory requests had been sampled there would be a wait of 4 cycles or 1872 ns as the priority circuitry serviced the other ports and returned to the request of the particular port. Then there would be the intervals of 117 ns and 468 ns while its memory operation was processed—a total of 2457 ns. This may be compared with the maximum rate of data flow. With a transmission rate of 4.27 Mbits/sec and 11 bits per character, the period from one byte to the next is 2576 ns, showing that no data can be lost. The maximum rate at which a port needs memory access is however, 389 MHz or 1.566 MHz for the aggregate of the 4 ports. The memory access requirements for the refresh logic is 0.064 MHz so that even with maximum port activity 0.52 MHz of memory access is available for the CPU, and in practice more than this because of the dual memory system.

The start up of the link is not directly related to the invention and needs only cursory description. It is effected by turning on switch 24 of power supply 22. The application of the power supplies to the equipment set gates in initial states and starts the CPU on a program at address 0000 in start-up memory 44. The program may go through various system test of if desired but in any case selects a station as a master station for implementation and sets a flag in the status register L64 of corresponding port indicating that the link is ready to be programmed. The master station has been periodically requesting a status report from the link and now for the first time receives a report that the link is ready for programming. The master station then enters the operating program into the common memory using the procedure as described above for entering data. After the program is entered the master station transmits the reset command and this transfers the CPU to the program just entered in the common memory. The system then begins its normal operations.

## Claims

1. A communication link (12) for receiving data from one station of a data processing network (10) having a plurality of stations and forwarding such data to another station of the data processing network, said link including a plurality of data ports (16-0, 16-1, 16-2, 16-3) each constructed to receive data from and dispatch data to an associated station (14-0, 14-1, 14-2, 14-3) when connected thereto, a processor (18) for effecting manipulations of data in accordance with a program, a memory unit (20) for storing data, memory priority circuitry (68) which receives signals indicating the needs of link components for access to the memory characterised in that in response to said memory access needs, said memory priority circuitry emits signals determining, in accordance with a priority scheme, the access to the memory, and interconnections connecting said port, processor (18), and memory together, wherein

said memory unit (20) includes a common section (58) accessible to all of said ports and a plurality of local sections (62) each associated with one of said plurality of ports and accessible to its associated port, and no other port,

said interconnections include a dual memory bus (28) with a common bus subsystem (36) providing access to the common memory section and a local bus subsystem (30) providing access to the plurality of said local memory sections, said common and local subsystems being constructed to enable concurrent independent use,

each of said ports includes decoding circuitry (53) which receives signals from its associated station and in response thereto emits signals distinctively indicating the need for access to common or local memory, which emitted signals are transmitted to said memory priority circuitry (68),

said memory priority circuitry supplies timed signals which designate for each memory operating cycle the one of said ports which may have access to the memory, access being made available to the several ports in cyclic order,

said memory priority circuitry (68) for each memory cycle designates one of said ports for current service and responds to request signals from elements of the link (12) indicating needs for memory access, and if the currently designated port requests memory access, enables said currently designated port to use the common bus subsystem (36) or the local memory bus subsystem (30) in accordance with the signaled needs of said currently designated port, said memory priority circuitry (68) concurrently enabling other elements of the link (12) to use the bus subsystems not requested by the currently designated port.

2. Apparatus as claimed in claim 1 wherein the memory priority circuitry (68) processes memory access requests for a succeeding memory operation while a current memory operation is in progress.

3. Apparatus as claimed in claim 2 wherein the memory operation rate is such that the time interval expressed by $(n+1)$ T+L is less than the minimum time required to transmit one byte of data to one of said ports, n being the number of ports, T being the memory operating cycle period, and L being the overlap period during which memory requests are being processed for a succeeding memory operation while a current memory operation is in progress.

4. Apparatus as claimed in claim 1, including memory refresh circuitry (66), wherein said memory priority circuitry (68) gives memory access to said refresh circuitry at a priority level below said designated port but ahead of other link elements

each of said ports includes decoding circuitry (53) which receives signals from its associated station and in response thereto emits signals distinctively indicating the need for access to common or local memory, which emitted signals are transmitted to said memory priority circuitry (68).

## Patentansprüche

1. Verbindungseinrichtung (12) zum Empfang von Daten von einer Station eines eine Anzahl von Stationen umfassenden Datenverarbeitungsnetzes (10) und zur Weitergabe dieser Daten an eine andere Station des Datenverarbeitungsnetzes, wobei die Verbindungseinrichtung eine Anzahl von Datenkanälen (16-0, 16-1, 16-2, 16-3), von denen jeder dazu eingerichtet ist, Daten von einer zugeordneten Station (14-0, 14-1, 14-2, 14-3) zu empfangen und Daten dahin abzugeben, wenn diese daran angeschlossen ist, einen Prozessor (18), um Daten gemäß eines Programmes zu verarbeiten, sowie eine Speichereinheit (20), um Daten zu speichern und eine Speichervorrangschaltung (68) aufweist, die Signale empfängt, die Anforderungen von Komponenten der Verbindungseinrichtung für einen Speicherzugriff bezeichnen, dadurch gekennzeichnet, daß als Antwort auf die Anforderung für einen Speicherzugriff die Speichervorrangschaltung Signale abgibt, die in Übereinstimmung mit einem Vorrangschema den Zugriff auf den Speicher und Verbindungen festlegen, die den Datenkanal, den Prozessor (18) und den Speicher miteinander verbinden, wobei die Speichereinheit (20) einen Gemeinschaftsbereich (58), der allen Datenkanälen zugänglich ist und eine Anzahl von lokalen Bereichen (62) umfaßt, von denen jeder einem aus der Anzahl von Datenkanälen zugeordnet ist und der für seinen zugeordneten Datenkanal und keinen anderen zugänglich ist,

daß die Verbindungen einen Doppelspeicherbus (28) umfassen mit einem Gemeinschaftsbus-Subsystem (36), das einen Zugriff auf den Gemeinschaftsspeicherbereich ermöglicht, und einem Lokalbus-Subsystem (30), das einen Zugriff auf die Anzahl der lokalen Speicherbereiche ermöglicht, wobei das Gemeinschaftsbus-Subsystem und das Lokalbus-Subsystem dazu eingerichtet sind, einen gleichzeitigen unabhängigen Betrieb zu ermöglichen,

daß jeder der Kanäle einen Dekodierschaltkreis (53) umfaßt, der Signale von seiner zugeordneten Station empfängt und in Abhängigkeit davon Signale abgibt, die eindeutig die Anforderung für einen Zugriff auf den Gemeinschaftsspeicherbereich oder den lokalen Speicherbereich anzeigen, wobei die abgegebenen Signale an die Speichervorrangschaltung (68) gesendet werden,

daß die Speichervorrangschaltung zeitlich abgestimmte Signale bereitstellt, die bei jedem Speicherarbeitszyklus denjenigen der Kanäle bezeichnen, der Zugriff auf den Speicher nehmen darf, wobei der Zugriff der unterschiedlichen Kanäle in zyklischer Reihenfolge zugelassen wird,

daß die Speichervorrangschaltung (68) für jeden Speicherarbeitszyklus einen der Kanäle als den gerade zugelassenen bezeichnet und Anfragen für einen Speicherzugriff anzeigende Anforderungssignale von Elementen der Verbindungseinrichtungen (12) beantwortet sowie, falls der gerade zugelassene Kanal einen Speicherzugriff anfordert, den gerade zugelassenen Kanal je nach der angezeigten Anforderung des gerade zugelassenen Kanals die Benutzung des Gemeinschaftbus-Subsystems (36) oder des lokalen Bus-Subsystems (30) gestattet, und daß die Speichervorrangschaltung (68) gleichzeitig anderen Elementen der Verbindungseinrichtung (12) die Benutzung des nicht durch den gerade zugelassenen Kanal belegten Bus-Subsystems ermöglicht.

2. Verbindungseinrichtung nach Anspruch 1, bei der die Speichervorrangschaltung (68) Anforderungen für einen nachfolgenden Speicherzugriff bearbeitet, während ein laufender Speicherzugriff in Ausführung ist.

3. Verbindungseinrichtung nach Anspruch 2, bei der die Speicherarbeitsgeschwindigkeit zu gewählt ist, daß das Zeitintervall ausgedrückt durch (n+1)T+L, kürzer ist als die benötigte Mindestzeit, um ein Datenbyte an einen der Kanäle zu übertragen, wobei n die Anzahl der Kanäle, T die Speicherarbeitszykluszeit und L die Überschneidungszeit ist, in der die Speicherzugriffsanforderungen für einen nachfolgenden Speicherzugriff bearbeitet werden, während ein laufender Speicherzugriff in Ausführung ist.

4. Verbindungseinrichtung nach Anspruch 1, mit einem Speicherauffrischschaltkreis (66), bei der die Speichervorrangschaltung (68) dem Speicherauffrischhaltkreis einen Speicherzugriff auf einer Prioritätsebene gestattet, die niedriger ist als die des gerade zugelassenen Kanales, aber höher als die der anderen Elemente der Verbindungseinrichtung, wobei jeder der Kanäle einen Dekodierschaltreis (53) umfaßt, der Signale von seiner zugeordneten Station empfängt und als Antwort darauf Signale aussendet, die eindeutig die Anforderung für einen Zugriff auf den Gemeinschaftsspeicher oder den lokalen Speicher anzeigen, wobei die ausgesendeten Signale an die Speichervorrangschaltung (68) übertragen werden.

## Revendications

1. Liaison de communication (12) destinée à recevoir des données en provenance de l'un des postes d'un réseau de traitement de données (10) comportant plusieurs postes et à envoyer de telles données à un autre poste du réseau, ladite liaison comportant plusieurs ports de données (16-0, 16-1, 16-2, 16-3) agencés chacun de manière à recevoir des données d'un poste associé (14-0, 14-1, 14-2, 14-3) et à lui envoyer des données lorsqu'il lui est connecté, un processeur (18) propre à effectuer des manipulations de données conformément à un programme, une unité de mémoire (20) propre à mémoriser des données, un ensemble de circuits de priorité de mémoire (68) qui reçoit des signaux indiquant les besoins des composants de la liaison pour accéder à la mémoire, caractérisée en ce que, en réponse auxdits besoins d'accès mémoire, ledit ensemble de circuits de priorité de mémoire émet des signaux déterminant, conformément à un schéma de priorités, l'accès à la mémoire, des interconnexions reliant entre eux ledit port, ledit processeur (18) et ladite mémoire, et en ce que

ladite unité de mémoire (20) comporte une section commune (58) accessible à tous lesdits ports et plusieurs sections locales (62) chacune associée à l'un desdits plusieurs ports et accessible à son port associé et à aucun autre port,

lesdites interconnexions comprennent un bus de mémoire double (28) avec un sous-système de bus commun (36) donnant accès à la section de mémoire commune et un sous-système de bus local (30) donnant accès auxdites plusieurs sections de mémoire locales, lesdits sous-systèmes de bus commun et local étant agencés de manière à permettre une utilisation indépendante concomitante,

chacun desdits ports comporte un ensemble de circuits de décodage (53) qui reçoit des signaux en provenance de son poste associé et émet en réponse à ceux-ci des signaux indiquant distinctivement le besoin d'accéder à la mémoire commune ou locale, ces signaux émis étant transmis audit ensemble de circuits de priorité de mémoire (68),

ledit ensemble de circuits de priorité de mémoire délivre des signaux cadencés qui désignent pour chaque cycle de fonctionnement de mémoire celui desdits ports qui peut avoir accès à la mémoire, l'accès étant rendu possible aux différents ports dans un ordre cyclique,

ledit ensemble de circuits de priorité de mémoire (68) désigne pour chaque cycle de mémoire l'un desdits ports pour être desservi et répond à des signaux de demande en provenance d'éléments de la liaison (12) qui indiquent des besoins d'accès mémoire, et, si le port désigné demande accès à la mémoire, autorise ledit port désigné à utiliser le sous-système de bus commun (36) ou le sous-système de bus de mémoire local (30) selon les besoins signalés dudit port désignée, ledit ensemble de circuits de priorité de mémoire (68) autorisant simultanément d'autres éléments de la liaison (12) à utiliser les sous-systèmes de bus non demandés par le port désigné.

2. Appareil selon la revendication 1, dans lequel l'ensemble de circuits de priorité de mémoire (68) traite des demandes d'accès mémoire afférentes à une opération de mémoire suivante pendant qu'une opération de mémoire antécédente est en cours.

3. Appareil selon la revendication 2, dans lequel la cadence d'opérations de mémoire est telle que l'intervalle de temps exprimé par (n+1) T+L soit inférieur au temps minimum nécessaire pour transmettre un multiplet de données à l'un desdits ports, n étant le nombre de ports, T étant la période du cycle de fonctionnement de la mémoire et L étant la période de chevauchement durant laquelle des demandes d'accès mémoire sont en cours de traitement pour une opération de mémoire suivante pendant qu'une opération de mémoire antécédente est en cours.

4. Appareil selon la revendication 1, comportant un ensemble de circuits de refraîchissement de mémoire (66), dans lequel ledit ensemble de circuits de priorité de mémoire (68) donne accès à la mémoire audit ensemble de circuits de rafraîchissement de mémoire à un niveau de priorité plus bas que celui dudit port désigné mais supérieur à celui des autres éléments de la liaison, chacun desdits ports comportant un ensemble de circuits de décodage (53) qui reçoit des signaux de son poste associé et émet en réponse à ceux-ci des signaux indiquant distinctivement le besoin d'accéder à la mémoire commune ou à la mémoire locale, ces signaux émis étant transmis audit ensemble de circuits de priorité de mémoire (68).

FIG 1

FIG 2

## FIG 3

# FIG 4

## FIG 5

16-1

50

42  32  34  38  40

STATUS
L64

COAX
DRIVERS
AND
RECEIVERS

LM
ADDRESS
L58

LM
DATA IN
L62

LM
DATA OUT
L80

52-1

CM
ADDRESS
L59
L78

53

DECODE
CIRCUITRY

CM
DATA IN
L63

CM
DATA OUT
L81

54

DIAGNOSTIC AND
CONTROL CIRCUITRY

56

MEMORY
REQUEST
CONTROL

$\overline{SMRQ}$ 1
$\overline{SMWT}$ 1
$\overline{SCM}$ 1
$\overline{SENC}$ 1
$\overline{SENL}$ 1
$\overline{SMAK}$ 1

72-1

FIG 6-1A

FIG 6-1B

FIG 6-1C

FIG 6-2A

FIG 6-2B

0 064 074

FIG 6-2C

11

FIG 6-3A

FIG 6-3B

FIG 6—3C

FIG 7-IA

0 064 074

FIG 7-1B

16

0 064 074

FIG 7-IC

17

FIG 7-2A

FIG 7-2B

FIG 7-2C

FIG 8-IA

FIG 8-1B

FIG 8-1C

FIG 8-2A

24

FIG 8-2B

FIG 8-2C

FIG 8-3A

FIG 8-3B

FIG 8-3C